# EUROPÄISCHE PATENTSCHRIFT

(11) **EP 2 993 512 B1**
(45) Veröffentlichungstag und Bekanntmachung des Hinweises auf die Patenterteilung: **04.11.2020**
(21) Anmeldenummer: 15183969.3
(22) Anmeldetag: 04.09.2015
(51) Int. Cl.: G02B 27/00, G02B 7/10

(54) **WEITWINKELOBJEKTIV**
WIDE-ANGLE LENS
OBJECTIF GRAND ANGLE

(30) Priorität: 05.09.2014 DE 102014112853
(43) Veröffentlichungstag der Anmeldung: 09.03.2016
(73) Patentinhaber: Leica Camera AG, 35578 Wetzlar (DE)
(72) Erfinder: MARTIN, Alexander, 35396 Gießen (DE)
(74) Vertreter: Stamer, Jan

(56) Entgegenhaltungen:
- EP-A1- 1 837 693
- EP-A1- 2 696 231
- WO-A1-2014/046126
- US-A- 4 449 793
- US-A- 4 783 157
- US-A- 5 315 441
- US-A- 5 444 573
- US-A1- 2003 103 275
- US-A1- 2005 168 807

## Beschreibung

Die Erfindung betrifft ein fotografisches Weitwinkelobjektiv mit Gesamtfokussierung, Floatingelement und Aperturblende. Als Gesamtfokussierung wird die Bewegung des Gesamtobjektivs relativ zur Bildebene bei der Fokussierung bezeichnet. Ein Floatingelement ist Teil des Gesamtobjektivs und wird bei der Fokussierung innerhalb des Gesamtobjektivs zusätzlich verschoben. Die Aperturblende bestimmt das Öffnungsverhältnis des Objektivs. Objektive mit diesen Elementen sind an sich bekannt

Aus der Druckschrift US 5 315 441 A ist ein Weitwinkelobjektiv bekannt mit einer Fokussiermöglichkeit der in drei Gruppen G2-G4 zusammengefassten Linsen L2 bis L8, wobei die Gruppe G3 ein Floatingelement darstellt und mit einer Blende S nachfolgend der Gruppe G2.

Der Erfindung lag die Aufgabe zugrunde, ein Weitwinkelobjektiv mit sehr guter Abbildungsleistung über das gesamte Bildfeld bei sehr kompakter Baulänge und sehr geringer Verzeichnung zu schaffen. Dabei sollten eine sehr gute Farbkorrektur bei hoher Blendenzahl, eine sehr gute Fertigbarkeit mit ausgewogenen Toleranzen und hohen Kontrastwerten über das gesamte Bildfeld erreicht werden.

Diese Aufgabe wird erfindungsgemäß durch einen Aufbau des Weitwinkelobjektivs mit den Merkmalen des Anspruchs 1 gelöst. Vorteilhafte Ausgestaltungen ergeben sich aus den Merkmalen der Unteransprüche.

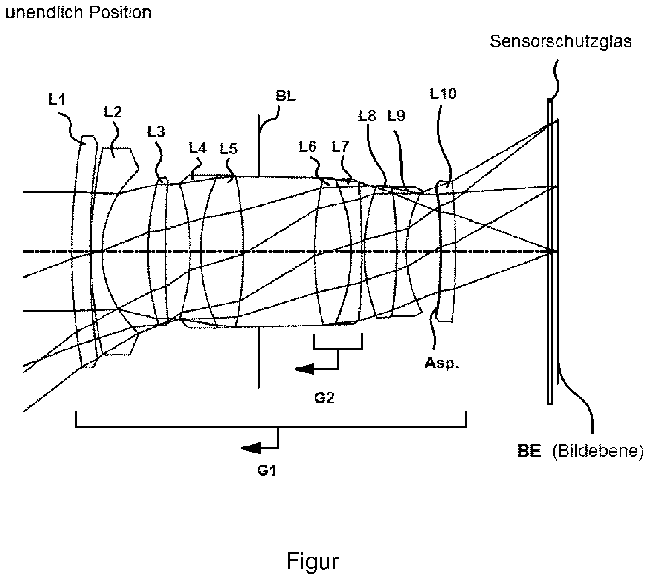

In der Figur ist ein Ausführungsbeispiel des erfindungsgemäßen Weitwinkelobjektivs in der Fokusstellung auf unendliche Objektentfernung schematisch dargestellt und wird nachfolgend anhand der Figur näher beschrieben.

Die Figur zeigt ein photografisches Weitwinkelobjektiv mit Gesamtfokussierung und Floatingelement. In der Bildebene BE ist ein fotoelektrischer Sensor mit Schutzglas angeordnet. Bei der Fokussierung von Unendlich-Stellung nach Nah-Stellung wird die gesamte Optik, Gruppe 1 (G1), von der Bildebene BE weg bewegt. Die Gruppe 2 (Floatingelement, G2) bewegt sich dabei in die gleiche Richtung, jedoch schneller als die restliche Optik. Das ist durch unterschiedlich lange Pfeile dargestellt. Bei einer Bewegung zurück in die Unendlich-Stellung dreht sich die Pfeilrichtung um.

Die Abbildungslänge (Fokusbereich des Objektivs) liegt zwischen Unendlich und 0,7m. Die gesamte Gruppe G1 legt bei der Fokussierung 1,05mm zurück. Die Gruppe G2 legt zusätzlich dazu 0,27mm, sodass die Gesamtbewegung der Gruppe G2 bei Fokussierung von unendlich bis 0,7m einen Gesamtweg von 1,32mm zurücklegt.

Die Bewegung der Gruppe G2 gewährleistet eine Korrektur (Neutralisierung) der Abbildungsfehler, die durch die Bewegung der Gruppe G1 entstehen.

Der Aufbau dieses Weitwinkelobjektivs kennzeichnet sich dadurch, dass positive und negative Brechkräfte in strikter Abwechslung auftreten. Das Verhalten der Brechkräfte wird um die Blende (BL) gespiegelt. Dieser besondere Aufbau lässt die optischen Fehler im Minimum verweilen. Die besondere Herausforderung besteht darin, die Brechkraftbeträge sich so abwechseln zu lassen, dass eine Balance für die 7 optischen Fehler, die sich sehr oft entgegengesetzt verhalten, eintritt. Dies wird mit der Verteilung der Linsenbrechkräfte nach der folgenden Aufstellung bewirkt.
Linse 1 (positiv), Brechkraft= 0,65 Dpt.
Linse 2 (negativ), Brechkraft= -18,93 Dpt.
Linse 3 (positiv), Brechkraft= 15,54 Dpt.
Linse 4 (negativ), Brechkraft= -42,54 Dpt.
Linse 5 (positiv), Brechkraft= 43,22 Dpt.
   Blende (BL)
Linse 6 (positiv), Brechkraft= 43,09 Dpt.
Linse 7 (negativ), Brechkraft= -22,42 Dpt.
Linse 8 (positiv), Brechkraft= 41,19 Dpt.
Linse 9 (negativ), Brechkraft= -42,77 Dpt.
Linse 10 (positiv), Brechkraft= 1,51 Dpt.

Der gespiegelte Aufbau der Brechkräfte um die Blende bewirkt eine geringe Verzeichnung des Weitwinkelobjektivs.

Ein besonderes Merkmal gegenüber anderen Weitwinkelobjektiven dieser Kathegorie (Kathegoriemerkmale: Weitwinkel, Kleinbildformatobjektive, Blendenzahl) ist die geringe Größe der Verzeichnung. Diese beträgt in der Nah- Stellung (0.7m) nur noch -0,6%. Dieser außergewöhnlich geringe Wert der Verzeichnung in der Nah-Stellung ist auf den Aufbau des Objektivs zurückzuführen, d.h. Verteilung der Brechkräfte um die Blende.

Eine Besonderheit im Aufbau stellt die asphärische Linse (L10) da. Die Asphäre liegt auf der Linse 10. Dies ist eine von der Brechkraft besonders schwache Linse. Die weite Position der Linse 10 von der Blende und deren schwache Brechkraft bewirken, dass der Einfluss auf den sphärischen Fehler des Objektivs sehr gering ist. Gleichzeitig ist durch die asphärische Fläche (Asp.) der Einfluss auf optisches Coma sehr stark. Linse 10 bewirkt durch ihre besondere Position, Brechkraft und asphärische Fläche eine Entkoppelung der optischen Fehler voneinander. Durch diese Entkoppelung lassen sich optische Fehler einzeln viel effektiver korrigieren, als wenn sie sich gegenseitig beeinflussen würden. Das Resultat der Entkoppelung ist eine hohe Leistung des Objektivs. Der zweite Effekt der Entkoppelung ist die bessere Justierbarkeit des Objektivs. Bei der Justage der asphärischen Linse 10 wird eben nur auf einen optischen Fehler (Coma) geachtet. Dies erleichtert die Justage und erhöht die Produktivität.

Die Besonderheit der kurzen Baulänge des Weitwinkelobjektivs liegt in den 3 Kittgliedern begründet. Jedes Kittglied verkürzt die Baulänge, weil zwei verkittete Linsen weniger Platz beanspruchen als zwei unverkittete Linsen. Die Schwierigkeit besteht dabei die optische Leistung (Kontrast) zu erhalten, weil mit jedem Kittglied ein Freiheitsgrad (Linsenradius) entfällt.

Das erste Kittglied, Linse 4/Linse 5, bestehend aus einer negativen Linse 4 (Brechkraft= -42,54 Dpt.) und einer positiven Linse 5 (Brechkraft= 43,22 Dpt) ist so ausgeführt, dass die Brechkräfte der beiden Linsen sich gegenseitig nahezu aufheben. Die resultierende Brechkraft ist sehr schwach. Mit niedriger Abbe Zahl für Linse 4 ve=31,92 bei mittlerem Brechungsindex ne=1,677644 und höherer Abbe-Zahl ve=40,52 für Linse 5 bei hohem Brechungsindex ne= 1,888146 lässt sich eine Kittgliedkombination erreichen, die sich sehr günstig auf die Farbfehler und die Bildfeldwölbung des Objektivs auswirkt.

Das zweite Kittglied, Linse 6/ Linse 7, ist das Floatingelement. Es besteht aus zwei gekitteten Linsen. Die Linse 6 (positive Brechkraft) hat Brechungsindex ne=1,820167, Abbe-Zahl ve= 46,37 und Brechkraft=43,09 Dpt. Linse 7 (negative Brechkraft) hat Brechungsindex ne=1,791873, Abbe-Zahl ve= 25,69 und Brechkraft= -22,42 Dpt. Die Kombination der Brechungsindizes, Abbe-Zahlen und Brechkräfte gewährleistet, dass das Floatingelement sehr geringe Bildfeldwölbung und Farbfehler hat. Dies wiederum bewirkt, dass das Objektiv über den gesamten Fokussierbereich während der Bewegung des Floatingelements einen sehr hohen Kontrast aufweist.

Das dritte Kittglied, besteht aus einer Linse 8 mit positiver Brechkraft= 41,19 Dpt. und der Linse 9 mit negativer Brechkraft= -42,77 Dpt. Auch bei diesem Kittglied analog zum ersten Kittglied heben sich die Brechkräfte nahezu auf. Auch hier lässt sich mit niedriger Abbe Zahl für Linse 9 ve=31,92 bei mittlerem Brechungsindex ne=1,677644 und höherer Abbe-Zahl ve=40,52 für Linse 8 bei hohem Brechungsindex ne= 1,888146 eine Kittgliedkombination erreichen, die sich sehr günstig auf die Farbfehler und die Bildfeldwölbung des Objektivs auswirkt.

Bei Kittglied 1 und Kittglied 3 werden identische Glaskombinationen verwendet. Die Reihenfolge ist spiegelverkehrt. Jedes der Kittglieder wurde so ausgeführt, dass die Linse mit positiver Brechkraft einen höheren Brechungsindex ne und auch die höhere Abbe-Zahl ve bekommt, als die Linse mit negativer Brechkraft. Die Brechkräfteverhältnisse, Abbezahlverhältnisse und Brechungsindexverhältnisse sind entscheidend für die gute Farbkorrektur und geringe Petzvalsumme, was wiederum eine geringe Bildfeldwölbung zur Folge hat.

Die Linsen 2,3,5,6,7,8,10 des photografischen Objektivs haben alle eine anomale Teildispersion.

Linsen mit einer anomalen Teildispersion haben die Aufgabe die Wellenlängen des sekundären Spektrums (violettblauer Wellenlängenbereich) zu korrigieren. Die anomale Teildispersion ist eine optische Eigenschaft des verwendeten Glases. Das Glas hat die Eigenschaft die violettblauen Wellenlängen stark anders zu brechen, als die roten Wellenlängen. Weil die Optik als Wissenschaft strikt nach Richtung unterscheidet, gibt es eine positive und eine negative anomale Teildispersion. Die SCD-Werte, entweder positiv oder negativ, geben den Betrag und somit die Wirkung der anomalen Teildispersion an.

Um die anomale Teildispersion des Glases für die Farbkorrektur nutzen zu können, bedarf es einer besonderen Kombination aus Brechkraft, Position der Linse im Bezug zur Blende, sowie des Vorzeichens der anomalen Teildispersion, bei der jeweiligen Linse.

Die Linse 2 hat eine sehr starke positive anomale Teildispersion SCD. Linse 2 hat Brechungsindex ne=1,439854, Abbe-Zahl ve= 94,49, SCD=0,3260 und Brechkraft= -18,93 Dpt. Ihre Position, weit entfernt von der Blende im Vorderblendenbereich, negative Brechkraft, eine sehr hohe Abbe-Zahl und starke positive anomale Teildispersion, bewirken eine hohe Korrektion der Farbe und des sekundären Spektrums (violettblauer Wellenlängenbereich). Dies wiederum bewirkt, dass der Kontrast (MTF-Kurven) des Objektivs sehr hoch ist.

Die Linsen 3,5,6,7,8,10 haben folgende optische Werte:

| | Brechungsindex ne | Abbe-Zahl ve | SCD-Wert | Brechkraft |
|---|---|---|---|---|
| Linse 3 | 1,888146 | 40,52 | -0,1082 | 15,54 Dpt. |
| Linse 5 | 1,888146 | 40,52 | -0,1082 | 43,22 Dpt. |
| Linse 6 | 1,820167 | 46,37 | -0,0895 | 43,09 Dpt. |
| Linse 7 | 1,791873 | 25,69 | 0,1036 | -22,42 Dpt. |
| Linse 8 | 1,888146 | 40,52 | -0,1082 | 41,19 Dpt. |
| Linse 10 | 1,834261 | 36,87 | -0,1053 | 1,51 Dpt. |

Alle aufgeführten Linsen tragen dazu bei, damit der violettblaue Wellenlängenbereich möglichst gut korrigiert wird.

Nicht immer ist es vom Vorteil eine hohe anomale Teildispersion zu haben. Manchmal entfaltet eine hohe anomale Teildispersion in Kombination mit hoher Brechkraft zerstörende Wirkung auf den violettblauen Wellenlängenbereich. Dies ist immer dann der Fall, wenn die Position der Linse im Gesamtaufbau Glaseigenschaften erfordert, die in Realität nicht existieren. In solchen Fällen ist es vom Vorteil Linsenbrechkraft und die anomale Teildispersionen so gering wie möglich zu halten. Die in der vorstehenden Tabelle aufgeführten Linsen weisen eine geringe negative oder positive anomale Teildispersion auf.

Ungewöhnlich für ein Weitwinkelobjektiv ist die positive Frontlinse Linse 1 mit Brechkraft= 0,65 Dpt. Diese Linse bewirkt eine zusätzliche Verzeichnungskorrektur sowohl im Unendlichen als auch bis zu 0,7m Fokussierentfernung.

Die ausgewogenen Toleranzen des Objektivs und gute Fertigbarkeit wurden dadurch erreicht, dass die Linsen 2 bis 9 ein ausgewogenes Brechkraftverhältnis haben. Die an Brechkraft stärkste Linse ist ca. 2,8x so stark wie die Brechkraft der schwächsten Linse. Wird dieses Verhältnis überschritten, so werden die Toleranzen zunehmend unfreundlicher. Die Linsen 1 und 10 haben Sonderfunktionen im Aufbau. Ihre Brechkräfte sind deswegen absichtlich sehr schwach bemessen und für das Brechkraftverhältnis ohne Bedeutung. Linse 10 ist wie oben beschrieben ein Substrat für die asphärische Fläche, sie dient der Entkoppelung der optischen Fehler. Linse 1 schützt Linse 2 vor physischen und chemischen Einflüssen, ihre sekundäre Aufgabe ist zusätzliche Korrektur der Verzeichnung.

Das Weitwinkelobjektiv besitzt ein Öffnungsverhältnis 1:1,4 und eine Brennweite von 28 mm.

## Patentansprüche

1. Weitwinkelobjektiv mit Floatingelement (G2) und Aperturblende (BL) bestehend aus einer Gruppe (G1) von zehn Linsen mit zur Blende (BL) im Vorzeichen gespiegelt angeordneter Brechkraftfolge, wobei 5 in Lichtrichtung vor und nach der Blende (BL) abwechselnd Linsen positiver und negativer Brechkraft angeordnet sind, das Floatingelement (G2) in der Gruppe (G1) in Lichtrichtung der Blende (BL) nachgeordnet ist, und zur Fokussierung die Gruppe (G1) relativ zur feststehenden Bildebene 10 (BE) sowie das Floatingelement (G2) innerhalb der Gruppe (G1) verschiebbar ist.

2. Weitwinkelobjektiv nach Anspruch 1, **dadurch gekennzeichnet, dass** die vor der Blende (BL) angeordneten Linsen (L4/L5) negativer und positiver Brechkraft zu einem ersten Kittglied zusammengefasst sind.

3. Weitwinkelobjektiv nach Anspruch 2, **dadurch gekennzeichnet, dass** sich die Brechkräfte der beiden Linsen (L4/L5) des ersten Kittgliedes gegenseitig nahezu aufheben.

4. Weitwinkelobjektiv nach einem der vorhergehenden Ansprüche, **dadurch gekennzeichnet, dass** die der Blende (BL) folgenden vier Linsen (L6-L9) zu einem zweiten und dritten Kittglied (L6/L7; L8/L9) zusammengefasst sind.

5. Weitwinkelobjektiv nach einem der vorhergehenden Ansprüche, **dadurch gekennzeichnet, dass** das zweite Kittglied (L6/L7) als Floatingelement (G2) bei der Fokussierung des Gesamtobjektivs (G1) von der Bildebene weg bewegbar angeordnet ist.

6. Weitwinkelobjektiv nach Anspruch 5, **dadurch gekennzeichnet, dass** der Verstellweg des Floatingelements (G2) innerhalb des Gesamtobjektivs größer als der Verstellweg des Gesamtobjektivs ist.

7. Weitwinkelobjektiv nach Anspruch 6, **dadurch gekennzeichnet, dass** der Verstellweg des Floatingelements (G2) 1,257 mal länger als der des Gesamtobjektivs (G1) ist.

8. Weitwinkelobjektiv nach einem der vorhergehenden Ansprüche, **dadurch gekennzeichnet, dass** sich die Brechkräfte der beiden Linsen (L8/L9) des dritten Kittgliedes gegenseitig nahezu aufheben.

9. Weitwinkelobjektiv nach einem der vorhergehenden Ansprüche, **dadurch gekennzeichnet, dass** die Linsen (L4/L5; L8/L9) des ersten und dritten Kittgliedes identische Glaskombinationen aufweisen, wobei die Reihenfolge der Linsen spiegelverkehrt ist und jeweils die Linse mit positiver Brechkraft mit einem höheren Brechungsindex nₑ und einer höheren Abbe-Zahl vₑ ausgestattet ist als die Linse negativer Brechkraft.

10. Weitwinkelobjektiv nach einem der vorhergehenden Ansprüche, **dadurch gekennzeichnet, dass** die Frontlinse (L1) mit einer schwachen positiven Brechkraft ausgestattet ist.

11. Weitwinkelobjektiv nach einem der vorhergehenden Ansprüche, **dadurch gekennzeichnet, dass** die der Frontlinse (L1) folgende Linse (L2) mit einer starken positiven anomalen Teildispersion SDC = 0,3260 ausgestattet ist.

12. Weitwinkelobjektiv nach einem der vorhergehenden Ansprüche, **dadurch gekennzeichnet, dass** die in Lichtrichtung letzte Linse (L10) mindestens eine asphärische Fläche (Asp.) besitzt.

13. Weitwinkelobjektiv nach Anspruch 12, **dadurch gekennzeichnet, dass** die von der Bildebene abgewandte Fläche asphärisch ist und die Linse (L10) insgesamt mit einer schwachen Brechkraft ausgestattet ist.

14. Weitwinkelobjektiv nach einem der vorhergehenden Ansprüche, **dadurch gekennzeichnet, dass** das Gesamtobjektiv die nachstehende Brechkraftfolge der zehn Linsen aufweist
Linse 1 (positiv), Brechkraft= 0,65 Dpt.
Linse 2 (negativ), Brechkraft= -18,93 Dpt.
Linse 3 (positiv), Brechkraft= 15,54 Dpt.
Linse 4 (negativ), Brechkraft= -42,54 Dpt.
Linse 5 (positiv), Brechkraft= 43,22 Dpt.
Blende (BL)
Linse 6 (positiv), Brechkraft= 43,09 Dpt.
Linse 7 (negativ), Brechkraft= -22,42 Dpt.
Linse 8 (positiv), Brechkraft= 41,19 Dpt.
Linse 9 (negativ), Brechkraft= -42,77 Dpt.
Linse 10 (positiv), Brechkraft= 1,51 Dpt.

15. Weitwinkelobjektiv nach einem der vorhergehenden Ansprüche, **dadurch gekennzeichnet, dass** im ersten und dritten Kittglied (L4/L5; L8/L9) das Glas der negativen Linse (L4; L9) eine niedrige Abbe-Zahl vₑ = 31,92 und einen mittleren Brechungsindex nₑ = 1,677644 und das Glas der positiven Linse (L5; L8) eine vergleichbar höhere Abbe-Zahl vₑ = 40,52 bei hohem Brechungsindex nₑ = 1,888146 aufweist.

16. Weitwinkelobjektiv nach einem der vorhergehenden Ansprüche, **dadurch gekennzeichnet, dass** im zweiten Kittglied (L6/L7) das Glas der positiven Linse (L6) einen Brechungsindex nₑ = 1,820167 und eine Abbe-Zahl vₑ = 46,37 und das Glas der negativen Linse (L7) einen Brechungsindex nₑ = 1,791873 und eine Abbe-Zahl vₑ = 25,69 aufweist.

17. Weitwinkelobjektiv nach einem der vorhergehenden Ansprüche, **dadurch gekennzeichnet, dass** das Glas der auf die Frontlinse (L1) folgenden Linse (L2) einen Brechungsindex nₑ = 1,439854, eine Abbe-Zahl vₑ = 94,49 und eine anomale Teildispersion SCD = 0,3260 aufweist.

18. Weitwinkelobjektiv nach einem der vorhergehenden Ansprüche, **dadurch gekennzeichnet, dass** die Gläser der Linsen L3, L5, L6, L7, L8, L10 eine geringe negative oder positive anomale Teildispersion SCD mit folgenden Werten aufweisen:
L3, L5, L8 = -0,1082; L6 = -0,0895; L7 = 0,1036; L10 = -0,1053.

19. Weitwinkelobjektiv nach einem der vorhergehenden Ansprüche, **gekennzeichnet durch** eine Brennweite von 28 mm und ein Öffnungsverhältnis 1:1,4.

## Claims

1. Wide-angle lens with a floating element (G2) and an aperture stop (BL), consisting of a group (G1) of ten lens elements with a refractive power sequence arranged mirrored in sign with respect to the stop (BL), wherein lens elements of positive and negative refractive power are arranged in alternating fashion upstream and downstream of the stop (BL) in the light direction, the floating element (G2) is arranged in the group (G1) and downstream of the stop (BL) in the light direction and, for focusing purposes, the group (G1) is displaceable relative to the stationary image plane (BE) and the floating element (G2) is displaceable within the group (G1).

2. Wide-angle lens according to Claim 1, **characterized in that** the lens elements (L4/L5) of negative and positive refractive power arranged upstream of the stop (BL) are combined to form a first cemented element.

3. Wide-angle lens according to Claim 2, **characterized in that** the refractive powers of the two lens elements (L4/L5) of the first cemented element virtually cancel one another out.

4. Wide-angle lens according to any one of the preceding claims, **characterized in that** the four lens elements (L6-L9) following the stop (BL) are combined to form a second and a third cemented element (L6/L7; L8/L9).

5. Wide-angle lens according to any one of the preceding claims, **characterized in that** the second cemented element (L6/L7), as a floating element (G2), is arranged so as to be movable away from the image plane when focusing the overall lens (G1).

6. Wide-angle lens according to Claim 5, **characterized in that** the adjustment travel of the floating element (G2) within the overall lens is greater than the adjustment travel of the overall lens.

7. Wide-angle lens according to Claim 6, **characterized in that** the adjustment travel of the floating element (G2) is 1.257-times longer than that of the overall lens (G1).

8. Wide-angle lens according to any one of the preceding claims, **characterized in that** the refractive powers of the two lens elements (L8/L9) of the third cemented element virtually cancel one another out.

9. Wide-angle lens according to any one of the preceding claims, **characterized in that** the lens elements (L4/L5; L8/L9) of the first and third cemented element have identical glass combinations, with the sequence of the lens elements being mirrored and, in each case, the lens element with positive refractive power being equipped with a higher refractive index nₑ and a higher Abbe number vₑ than the lens element with negative refractive power.

10. Wide-angle lens according to any one of the preceding claims, **characterized in that** the front lens element (L1) is equipped with weak positive refractive power.

11. Wide-angle lens according to any one of the preceding claims, **characterized in that** the lens element (L2) following the front lens element (L1) is equipped with strong positive anomalous partial dispersion SDC = 0.3260.

12. Wide-angle lens according to any one of the preceding claims, **characterized in that** the last lens element (L10) in the light direction has at least one aspherical surface (Asp.).

13. Wide-angle lens according to Claim 12, **characterized in that** the surface facing away from the image plane is aspherical and the lens element (L10) is equipped with weak refractive power overall.

14. Wide-angle lens according to any one of the preceding claims, **characterized in that** the overall lens has the following refractive power sequence of the ten lens elements:
Lens element 1 (positive), refractive power = 0.65 dpt
Lens element 2 (negative), refractive power = -18.93 dpt
Lens element 3 (positive), refractive power = 15.54 dpt
Lens element 4 (negative), refractive power = -42.54 dpt
Lens element 5 (positive), refractive power = 43.22 dpt
Stop (BL)
Lens element 6 (positive), refractive power = 43.09 dpt
Lens element 7 (negative), refractive power = -22.42 dpt
Lens element 8 (positive), refractive power = 41.19 dpt
Lens element 9 (negative), refractive power = -42.77 dpt
Lens element 10 (positive), refractive power = 1.51 dpt

15. Wide-angle lens according to any one of the preceding claims, **characterized in that**, in the first and third cemented element (L4/L5; L8/L9), the glass of the negative lens element (L4; L9) has a lower Abbe number vₑ = 31.92 and a mid refractive index nₑ = 1.677644 and the glass of the positive lens element (L5; L8) has a comparatively higher Abbe number vₑ = 40.52 with a higher refractive index nₑ = 1.888146.

16. Wide-angle lens according to any one of the preceding claims, **characterized in that**, in the second cemented element (L6/L7), the glass of the positive lens element (L6) has a refractive index nₑ = 1.820167 and an Abbe number vₑ = 46.37 and the glass of the negative lens element (L7) has a refractive index nₑ = 1.791873 and an Abbe number vₑ = 25.69.

17. Wide-angle lens according to any one of the preceding claims, **characterized in that** the glass of the lens element (L2) following the front lens element (L1) has a refractive index nₑ = 1.439854, an Abbe number vₑ = 94.49 and an anomalous partial dispersion SCD = 0.3260.

18. Wide-angle lens according to any one of the preceding claims, **characterized in that** the glasses of the lens elements L3, L5, L6, L7, L8, L10 have a small negative or positive anomalous partial dispersion SCD with the following values:
L3, L5, L8 = -0.1082; L6 = -0.0895; L7 = 0.1036; L10 = -0.1053.

19. Wide-angle lens according to any one of the preceding claims, **characterized by** a focal length of 28 mm and a relative aperture of 1:1.4.

## Revendications

1. Objectif grand angle comprenant un élément flottant (G2) et un diaphragme d'ouverture (BL) comprenant un groupe (G1) de dix lentilles présentant une séquence d'indices de vergence disposées à symétrie de miroir en termes de signe par rapport au diaphragme (BL), des lentilles à vergences positives et négatives étant disposées alternativement avant et après le diaphragme (BL) par référence à la direction de la lumière, l'élément flottant (G2) étant disposé dans le groupe (G1) en aval du diaphragme (BL), et pour la mise au point, le groupe (G1) pouvant coulisser par rapport au plan image fixe (BE) et l'élément flottant (G2) pouvant coulisser à l'intérieur du groupe (G1).

2. Objectif grand angle selon la revendication 1, **caractérisé en ce que** les lentilles (L4/L5) à vergences négatives et positives, lesquelles sont disposées devant le diaphragme (BL), sont combinées pour former un premier élément collé.

3. Objectif grand angle selon la revendication 2, **caractérisé en ce que** les vergences des deux lentilles (L4/L5) du premier élément collé s'annulent pratiquement mutuellement.

4. Objectif grand angle selon l'une des revendications précédentes, **caractérisé en ce que** les quatre lentilles (L6-L9) suivant le diaphragme (BL) sont combinées pour former des deuxième et troisième éléments collés (L6/L7 ; L8/L9).

5. Objectif grand angle selon l'une des revendications précédentes, **caractérisé en ce que** le deuxième élément collé (L6/L7) est disposé en tant qu'élément flottant (G2) de manière à pouvoir s'écarter du plan image lorsque tout l'objectif (G1) est focalisé.

6. Objectif grand angle selon la revendication 5, **caractérisé en ce que** le trajet de déplacement de l'élément flottant (G2) à l'intérieur de tout l'objectif est supérieur au trajet de déplacement de tout l'objectif.

7. Objectif grand angle selon la revendication 6, **caractérisé en ce que** le trajet de déplacement de l'élément flottant (G2) est 1,257 fois plus long que celui de tout l'objectif (G1).

8. Objectif grand angle selon l'une des revendications précédentes, **caractérisé en ce que** les vergences des deux lentilles (L8/L9) du troisième élément collé s'annulent pratiquement mutuellement.

9. Objectif grand angle selon l'une des revendications précédentes, **caractérisé en ce que** les lentilles (L4/L5 ; L8/L9) des premier et troisième éléments collés ont des combinaisons de verre identiques, l'ordre des lentilles étant inversé en miroir et, dans chaque cas, la lentille à vergence positive étant pourvue d'un indice de réfraction nₑ plus élevé et d'un nombre d'Abbe vₑ plus élevé que la lentille de vergence négative.

10. Objectif grand angle selon l'une des revendications précédentes, **caractérisé en ce que** la lentille avant (L1) est pourvue d'une faible vergence positive.

11. Objectif grand angle selon l'une des revendications précédentes, **caractérisé en ce que** la lentille (L2) suivant la lentille avant (L1) est pourvue d'une forte dispersion partielle anormale positive SDC = 0,3260.

12. Objectif grand angle selon l'une des revendications précédentes, **caractérisé en ce que** la dernière lentille (L10) par référence à la direction de la lumière possède au moins une surface asphérique (Asp.).

13. Objectif grand angle selon la revendication 12, **caractérisé en ce que** la surface opposée au plan image est asphérique et la lentille (L10) est généralement pourvue d'une faible vergence.

14. Objectif grand angle selon l'une des revendications précédentes, **caractérisé en ce que** tout l'objectif comporte la séquence de vergences suivante des dix lentilles
Lentille 1 (positive), Vergence = 0,65 dioptrie
Lentille 2 (négative), Vergence = -18,93 dioptries
Lentille 3 (positive), Vergence = 15,54 dioptries
Lentille 4 (négative), Vergence = -42,54 dioptries
Lentille 5 (positive), Vergence = 43,22 dioptries Diaphragme (BL)
Lentille 6 (positive), Vergence = 43,09 dioptries
Lentille 7 (négative), Vergence = -22,42 dioptries
Lentille 8 (positive), Vergence = 41,19 dioptries
Lentille 9 (négative), Vergence = -42,77 dioptries
Lentille 10 (positive), Vergence = 1,51 dioptrie.

15. Objectif grand angle selon l'une des revendications précédentes, **caractérisé en ce que** dans les premier et troisième éléments collés (L4/L5 ; L8/L9) le verre de la lentille négative (L4 ; L9) a un faible nombre d'Abbe vₑ = 31,92 et un indice de réfraction moyen nₑ = 1,677644 et le verre de la lentille positive (L5 ; L8) a un nombre d'Abbe comparativement plus élevé vₑ = 40,52 avec un indice de réfraction élevé nₑ = 1,888146.

16. Objectif grand angle selon l'une des revendications précédentes, **caractérisé en ce que** dans le deuxième élément collé (L6/L7) le verre de la lentille positive (L6) a un indice de réfraction nₑ = 1,820167 et un nombre d'Abbe vₑ = 46,37 et le verre de la lentille négative (L7) a un indice de réfraction nₑ = 1,791873 et un nombre d'Abbe vₑ = 25,69.

17. Objectif grand angle selon l'une des revendications précédentes, **caractérisé en ce que** le verre de la lentille (L2) suivant la lentille avant (L1) a un indice de réfraction nₑ = 1,439854, un nombre d'Abbe vₑ = 94,49 et une dispersion partielle anormale SCD = 0,3260.

18. Objectif grand angle selon l'une des revendications précédentes, **caractérisé en ce que** les verres des lentilles L3, L5, L6, L7, L8, L10 ont une dispersion partielle anormale SCD légèrement négative ou positive ayant les valeurs suivantes :
L3, L5, L8 = -0,1082 ; L6 = -0,0895 ; L7 = 0,1036 ; L10 = -0,1053.

19. Objectif grand angle selon l'une des revendications précédentes, **caractérisé par** une focale de 28 mm et un rapport d'ouverture de 1:1,4.
